# EUROPÄISCHE PATENTSCHRIFT

(11) **EP 1 037 829 B1**
(45) Veröffentlichungstag und Bekanntmachung des Hinweises auf die Patenterteilung: **09.01.2002**
(21) Anmeldenummer: 98962381.4
(22) Anmeldetag: 21.11.1998
(51) Int. Cl.: B65G 15/58, B65G 21/20

(54) **EINRICHTUNG ZUR ÜBERTRAGUNG VON FLÄCHENHAFTEN PRODUKTEN AUF EINE TRANSPORTEINRICHTUNG**
DEVICE FOR TRANSFERRING TWO-DIMENSIONAL PRODUCTS ONTO A TRANSPORTATION DEVICE
DISPOSITIF POUR TRANSFERER DES PRODUITS EN NAPPE SUR UN DISPOSITIF DE TRANSPORT

(30) Priorität: 11.12.1997 DE 19755058
(43) Veröffentlichungstag der Anmeldung: 27.09.2000
(73) Patentinhaber: LTS Lohmann Therapie-Systeme AG, 56626 Andernach (DE)
(72) Erfinder: SAHM, Dieter, D-57610 Ingelbach (DE)
(74) Vertreter: Flaccus, Rolf-Dieter, Dr.
(86) Internationale Anmeldenummer: EP9807505
(87) Internationale Veröffentlichungsnummer: WO9929599

(56) Entgegenhaltungen:
- EP-A- 0 439 897
- EP-A- 0 491 168
- US-A- 5 114 307

## Beschreibung

Die Erfindung betrifft eine Einrichtung, zur insbesondere kontinuierlichen Übertragung von vereinzelten flächenhaften Produkten auf eine Transporteinrichtung, vorzugsweise von Pflastern, Aufklebern oder Briefmarken. Aus US-A-5 114 307 ist eine solche Einrichtung bekannt.

Es sind Übertragungseinrichtungen für flächenhafte Produkte bekannt, die Umlenkkanten, Übergabewalzen und auch Abstreifbleche zur Lösung vereinzelter flächenhafter Produkte in einer Übergabeeinrichtung aufweisen. Die Übernahme dieser noch geordnet übergebenen Produkte in einer ebenfalls geordneten Weise durch eine die Produkte weitertransportierende Einrichtung ist jedoch problematisch, da die Ordnung, insbesondere bei einer kontinuierlichen Übertragung, nicht sichergestellt werden kann. Die Produkte werden in umgeordneter Anordnung weitertransportiert, wodurch deren Entnahme zur Verpackung oder Weiterverarbeitung erschwert ist.

Es ist Aufgabe der Erfindung, eine Einrichtung zur Übertragung von vereinzelten flächenhaften Produkten nach dem Oberbegriff des Anspruchs 1 zu schaffen, die eine geordnete Übernahme der Produkte von einer Übergabeeinrichtung und einen Weitertransport der Produkte in der geordneten Anordnung gestattet.

Diese Aufgabe wird bei einer Einrichtung nach dem Oberbegriff des Anspruchs 1 durch dessen kennzeichnende Merkmale gelöst.

Die Erfindung besteht darin, daß die Übertragungseinrichtung eine Übernahmeeinrichtung aufweist, die in eine die vereinzelten flächenhaften Produkte weitertransportierende Transporteinrichtung integriert ist, die mit einer Vakuumeinrichtung gekoppelt ist, derart, daß die Produkte im Zusammenwirken mit der Transporteinrichtung in geordneter Weise übernommen und an dieser fixiert werden. Dadurch ist ein Weitertransport der Produkte in der geordneten Anordnung sichergestellt.

Dabei kann die Transporteinrichtung ein Transportband sein, das regelmäßig angeordnete Saugöffnungen aufweist, die mit der Vakuumeinrichtung verbunden sind.

Die Vakuumeinrichtung ist vorteilhaft so gestaltet, daß sie eine Umlenkleiste für das Transportband aufweist, die der Übergabeeinrichtung zugewandt und vakuumbeaufschlagbar ist und mit einer ebenfalls vakuumbeaufschlagbaren Gleitfläche für das Transportband versehen ist, wobei in der Umlenkleiste und in der Gleitfläche Nuten und/oder Schlitze angeordnet sind, die mit den Saugöffnungen korrespondieren und über die kontinuierlich Luft abgesaugt werden kann.

Auf einfache Weise kann die Vakuumeinrichtung mit einem Vakuumbehälter versehen sein, der entlang der Transportstrekke ausgebildet ist und an dem diese Gleitfläche für das Transportband und auch die Umlenkleiste ausgebildet sind. Über Anschlußstutzen kann dieser Vakuumbehälter mit einer oder mehreren zu einer Vakuumpumpe führenden Leitungen versehen sein.

Um die Reibung zwischen dem Transportband und dem Vakuumbehälter gering zu halten, ist es von Vorteil, wenn die Umlenkleiste eine Umlenkwalze aufweist, in der als Saugöffnungen umlaufende Nuten angeordnet sind, die mit dem Innenraum des Vakuumbehälters in Verbindung stehen.

Das Transportband ist an dem der Umlenkleiste abgewandten Ende des Vakuumbehälters mit einer Entnahmeeinrichtung für die Produkte versehen, an der die Vakuumbeaufschlagung des Transportbandes gesperrt ist, so daß die Produkte durch geeignete Mittel geordnet entnehmbar sind.

Die Übergabeeinrichtung kann eine vakuumbeaufschlagte Walze sein, die an ihrer Oberfläche mit Saugöffnungen für die Produkte versehen ist. Die Umlenkleiste und das um diese geführte Transportband und diese Walze sind dabei parallel zueinander angeordnet und zwar in einem solchen Abstand, daß die Produkte den gebildeten Spalt gerade noch ohne Behinderung, d.h. ohne das Transportband zu berühren, passieren können. Im Anschluß an diesen Spalt, in Transportrichtung betrachtet, ist ein Übergabebereich ausgebildet, in dem die Verbindung der Saugöffnungen zur vakuumerzeugenden Einrichtung für die Walze gesperrt ist. Dadurch ist die Saugverbindung zwischen den Produkten und der Walze gelöst, so daß die Produkte vom umlaufenden Transportband angesaugt und in der durch die Übergabeeinrichtng vorgegebenen Anordnung fixiert und in Folge weitertransportiert werden können.

Zur Erleichterung und Beschleunigung des Übergabevorgangs können die Saugöffnungen der sich drehenden Walze im Übergabebereich mit einer Blaseinrichtung verbindbar sein, so daß die Produkte in diesem Bereich von der Walze abgestoßen werden.

Die Walze kann vorteilhaft zugleich als Stanzwalze ausgebildet sein, indem auf deren Umfang entsprechend der gewünschten Form der Produkte Stanzschneiden angeordnet sind. Dadurch können die Vereinzelungseinrichtung und die Übergabeeinrichtung auf eine einfache Weise vereint werden.

Die Erfindung wird sachstehend anhand eines Ausführungsbeispiels näher erläutert. Die zugehörigen Figuren zeigen, teilweise schematisch:
- Fig.1 :: eine erfindungsgemäße Einrichtung zur Übertragung von vereinzelten flächenhaften Produkten,
- Fig.2a:: einen Vakuumbehälter für ein die Produkte weitertransportierendes Transportband in Vorderansicht,
- Fig.2b:: den Vakuumbehälter in Draufsicht,
- Fig.2c:: den Vakuumbehälter in Seitenansicht,
- Fig.3 :: eine Draufsicht auf das Transportband,
- Fig.4a:: eine vakuumbeaufschlagbare Umlenkleiste für das Transportband in Vorderansicht,
- Fig.4b:: die Umlenkleiste in Draufsicht,
- Fig.4c:: die Umlenkleiste in Seitenansicht,
- Fig.5 :: eine Umlenkwalze
- Fig.6 :: eine Übergabeeinrichtung mit einer Stanzwalze, vom Transportband aus betrachtet,
- Fig.7a:: eine Vakuumkammer für die Stanzwalze,
- Fig.7b:: die Vakuumkammer in einem Vertikalschnitt A-A,
- Fig.7c:: einen Schnitt B-B durch die Vakuumkammer und
- Fig.7d:: einen Schnitt C-C durch die Vakuumkammern.

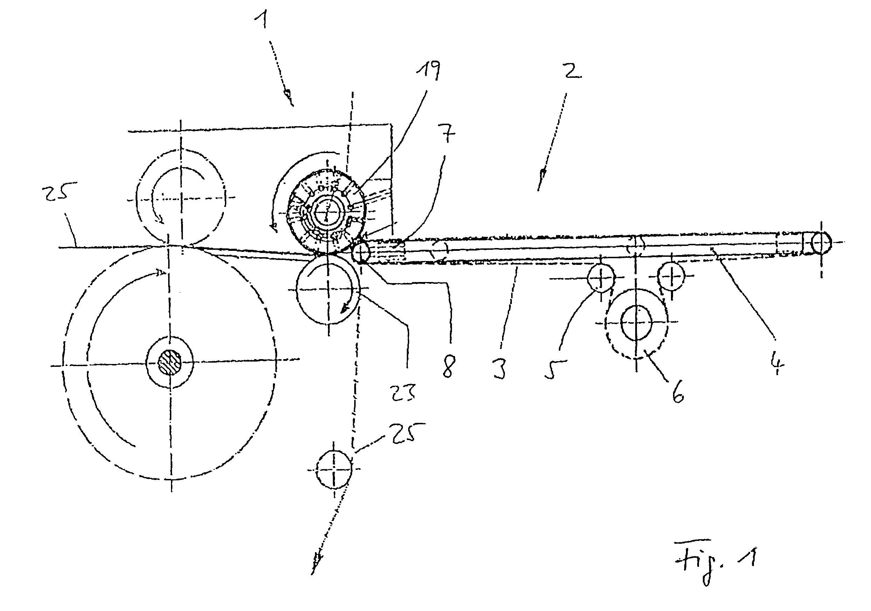

In Figur 1 ist eine aus einer Übergabeeinrichtung 1 für die Übergabe von vereinzelten flächenhaften Produkten P in geordneter Anordnung und einer die Produkte P übernehmenden und weitertransportierenden Transporteinrichtung gebildete Einrichtung schematisch dargestellt. Die Transporteinrichtung 2 weist ein Transportband 3 auf, das mit einer Vakuumeinrichtung (nicht dargestellt) gekoppelt ist, wobei dieses um einen zur Vakuumeinrichtung gehörenden quaderförmigen Vakuumbehälter 4 und zwei unter diesem angeordneten Spannwalzen 5 und eine Antriebswalze 6 geführt ist. Das Transportband 3 ist dabei auf der Oberseite des Vakuumbehälters 4 gleitend angeordnet. Auf der der Übergabeeinrichtung 1 zugewandten Seite ist an dem Vakuumbehälter 4 eine vakuumbeaufschlagbare Umlenkleiste 7 mit einer Umlenkwalze 8 angeordnet, über die das Transportband umgelenkt: wird.

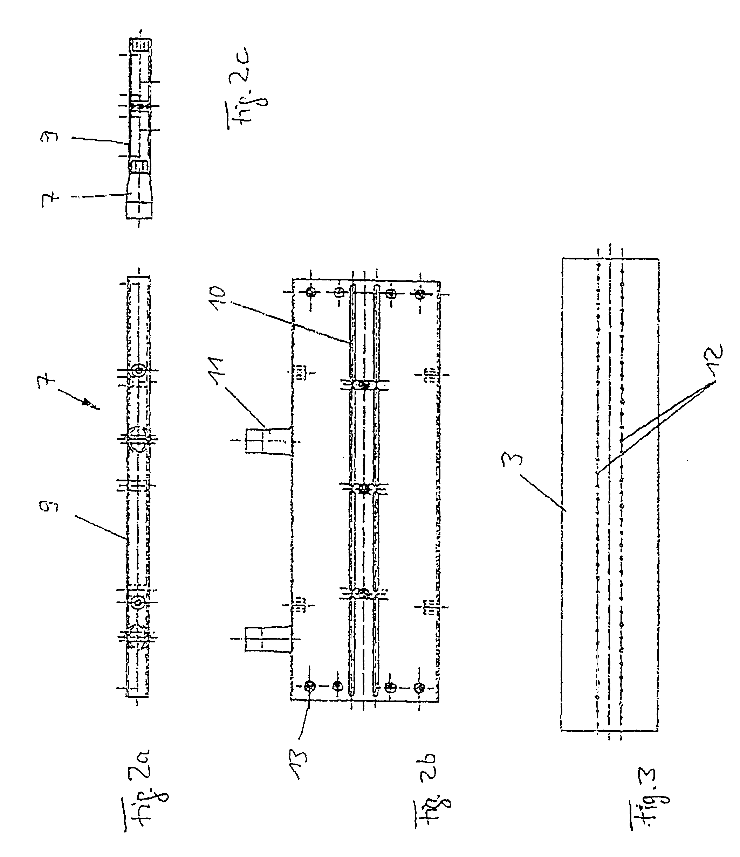

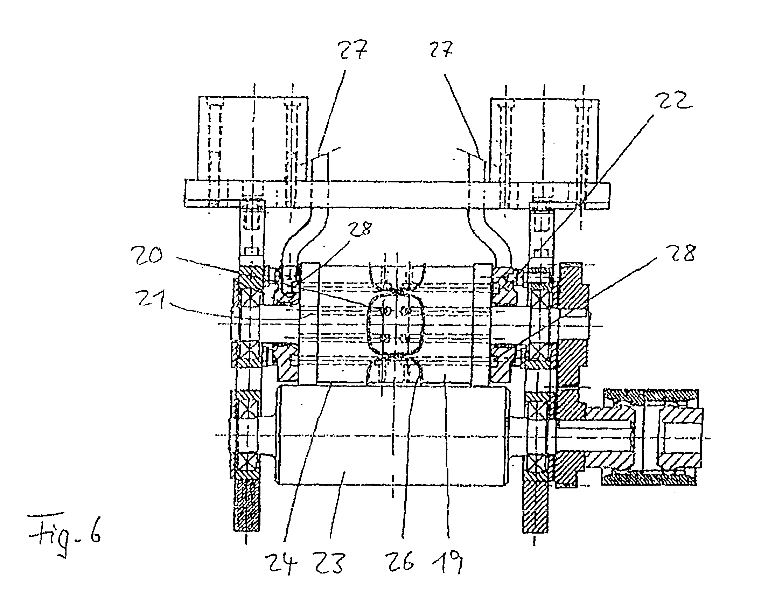

Die Fig. 2a - c zeigen, daß der Vakuumbehälter 4 an seiner Oberseite eine Gleitfläche 9 für das Transportband 3 aufweist, in der Schlitze 10 eingebracht sind. Zwei Anschlußstutzen 11 dienen der Anbindung des Vakuumbehälters 4 an eine nicht dargestellte Vakuumpumpe. Auf der in der Darstellung linken Seite der Fig. 2a und 2b ist die Umlenkleiste 7 mit der Umlenkwalze 8 dichtend plazierbar, die in den Fig. 4a - c und der Fig. 5 dargestellt ist und durch die der Vakuumbehälter 4 zur Übergabeeinrichtung verschlossen ist.

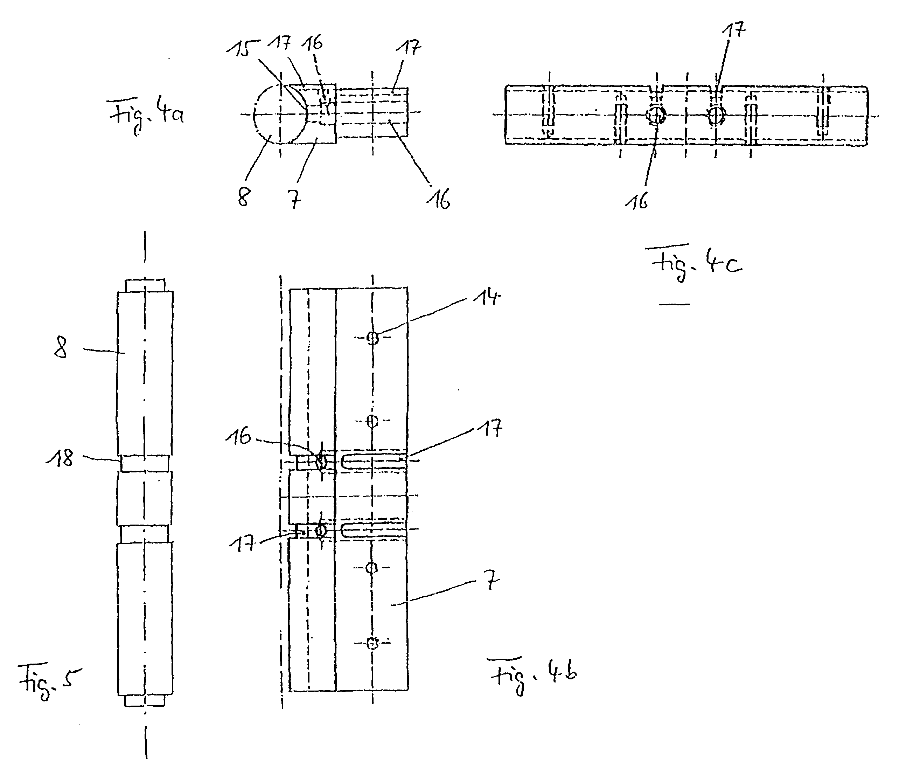

Das Transportband 3 (Fig. 3) weist regelmäßig ausgebildete Saugöffnungen 12 auf, die über den Schlitzen 10 angeordnet sind und die über diese eine ständige Verbindung zwischen der Transportfläche des Transportbandes 3 und dem. Inneren des Vakuumbehälters 4 herstellen. In der Gleitfläche 9 sind zur Befestigung der Umlenkleiste 7 Bohrungen 13 für Befestigungsschrauben angeordnet.

Die Umlenkleiste 7 ist als Einsatzstück für den Vakuumbehälter 4 ausgebildet und mit diesem verschraubbar. Dazu weist diese Gewindebohrungen 14 auf, die mit den Bohrungen 13 korrespondieren. Sie ist des weiteren mit einer halbschalenförmigen Gleitlagerfläche 15 für die für die Umlenkwalze 8 zur Erzielung einer optimalen Abdichtung versehen, wobei die Umlenkleiste 7 aus einem verschleißfesten und gleitfähigen Kunststoff gefertigt ist. In der Umlenkleiste 7 sind Saugbohrungen 16 und Kanäle 17 eingebracht, die eine Verbindung der Transportfläche des Transportbandes 3 mit dem Inneren des Vakuumbehälters 4 herstellt.
Die Umlenkwalze 8 weist zwei mit den Saugbohrungen 16 und den Kanälen 17 korrespondierende umlaufende Nuten 18 auf.

Das Transportband 3 ist so fest an den Vakuumbehälter 4 und die Umlenkwalze 8 gespannt, daß eine optimale Abdichtung derselben gegenüber der Umlenkleiste 7 gegeben ist, wobei jedoch eine Transportbandbewegung nicht behindert ist.

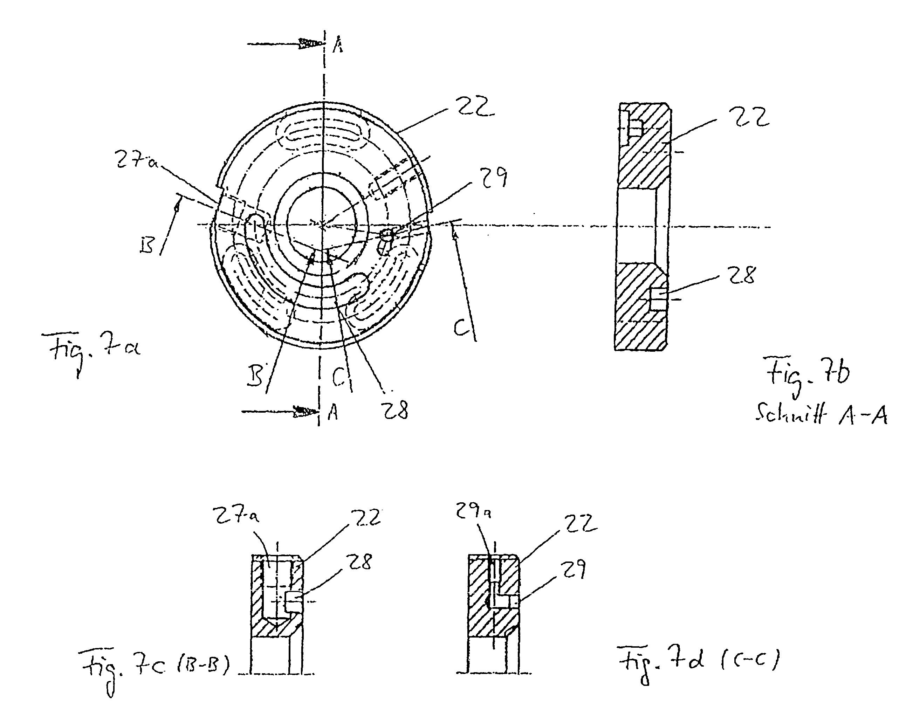

Auf der der Umlenkleiste 7 abgewandten Seite des Vakuumbehälters 4 ist dieser mit einer Dichtleiste (nicht dargestellt) verschlossen, die Bestandteil einer Entnahmeeinrichtung ist.
Die Übergabeeinrichtung 1 (Fig. 6) weist eine vakuumbeaufschlagte Stanzwalze 19 auf, die an ihrer Oberfläche im Bereich der zu übergebenden flächenhaften Produkte P mit Saugöffnungen 20 versehen ist, die über im Inneren der Stanzwalze 19 ausgebildete Kanäle 21 zu stirnseitig angeordneten Vakuumkammern 22 geführt sind. Mit einer Gegendruckwalze 23 bildet die Stanzwalze 19 einen Schlitz 24 zur Durchführung der Materialbahn 25, aus der die Produkte P ausgestanzt werden. Dazu weist die Stanzwalze 19 Stanzschneiden 26 auf, die der Form der Produkte entsprechen.

Die Vakuumkammern, die die Stanzwalze 19 mit einer Vakuumpumpe (nicht dargestellt) verbinden, weisen eine konzentrische Nut 28 sowie einen Belüftungskanal 29 auf, die mit den stirnseitigen Öffnungen der Kanäle 21 korrespondieren. Die Nut 28 ist jeweils über eine Gewindebohrung 27a mit einer Leitung 27 und der Belüftungskanal 29 über eine Bohrung 29a mit der Atmosphäre verbunden (Fig. 7a-d). Die Vakuumkammern 22 sind axial und verdrehbar zur Stanzwalze 19 angeordnet, so daß verschiedene Wechselstellungen und damit verschiedene Positionen der jeweiligen Nut 28 und des jeweiligen Belüftungskanals 29 gegenüber der Transporteinrichtung 2 einstellbar sind.

Die Übergabeeinrichtung 1 und die Transporteinrichtung 2 sind so zueinander angeordnet, daß die Produkte P den zwischen den beiden Einrichtungen (1;2) gebildeten Spalt ohne Behinderung passieren können, jedoch im Saugbereich der Transporteinrichtung 2 liegen.

Die Übergabeeinrichtung funktioniert derart, daß eine Materialbahn 25, aus der die Produkte P vereinzelt und weitertransportiert werden sollen, zwischen der Stanzwalze 19 und der Gegendruckwalze 23 transportiert und über letztere weggeführt wird. Dabei werden die Produkte P durch die Stanzschneiden 26 von der Materialbahn 25 getrennt. Die Vakuumkammern 22 sind so eingestellt, daß die Saugöffnungen 20, über denen sich das jeweilige gerade herausgestanzte Produkt P befindet, über die Kanäle 21 und die Nut 28 mit den Vakuumleitungen 27 verbunden sind, so daß das Produkt P nach seiner Abtrennung zunächst an der sich drehenden Stanzwalze 19 angesaugt verbleibt. Das Produkt P haftet so lange an der Stanzwalze 19, bis die Kanäle 21 aus dem Bereich der Nut 28 herausgedreht sind und in den Bereich des Belüftungskanals 29 kommen. Spätestens dann löst sich das jeweilige Produkt P von der Stanzwalze 19. Durch die gegebene Anordnung der Transporteinrichtung 2 und die unmittelbare Nähe des saugenden Transportbandes 3, welches sich über der Umlenkwalze 8 bereits im Saugbereich befindet, werden die ausgestanzten Produkte P nacheinander (gegebenenfalls auch nebeneinander) von diesem angesaugt, in der von der Übergabeeinrichtung 1 vorgegebenen Anordnung übernommen und in dieser Anordnung weitertransportiert.

## Patentansprüche

1. Vorrichtung zur Übertragung von vereinzelten flächenhaften Produkten, insbesondere Pflastern, Aufklebern oder Briefmarken, auf eine Transporteinrichung (3), umfassend eine Transporteinrichtung (3) und eine Übergabeeinrichtung (19) zur geordneten Zuführung der Produkte an die Transporteinrichtung (3), wobei diese mit einer Vakuumeinrichtung gekoppelt ist, durch die die Produkte im Zusammenwirken mit der Transporteinrichtung (3) in geordneter Weise übenommen und an dieser fixierbar sind, **dadurch gekennzeichnet, daß** die Transporteinrichtung (3) Saugöffnungen (12) in regelmäßiger Anordnung aufweist und daß die Übergabeeinrichtung eine Walze (19) mit an deren Umfang angeordneten Saugöffnungen (20) ist, die (20) durch eine vakuumbeaufschlagte Nut (28) mit Unterdruck und nach einer Teildrehung durch einen Belüftungskanal (29) mit Luft versorgt werden, wobei die Walze (19) quer zur Transporteinrichtung (3) angeordnet ist und die jeweils mit dem Belüftungskanal (29) verbundenen Saugöffnungen (20) der Transporteinrichtung (3) zugewandt und an dieser vorbeibewegbar sind.

2. Einrichtung nach Anspruch 1, **dadurch gekennzeichnet, daß** das Tansportband (3) auf der der Walze (19) zugewandten Seite eine Umlenkleiste (7) oder eine Umlenktrommel (8) aufweist, die mit den Saugöffnungen (12) korrespondierende Nuten und/oder Schlitze (10, 16, 17) für ein kontinuierliches Absaugen der Luft aufweist.

3. Einrichtung nach Anspruch 2, **dadurch gekennzeichnet, daß** die Umlenkleiste (7) und die Gleitfläche (9) an einem sich über die Transportstrecke erstreckenden Vakuumbehälter (4) ausgebildet sind, der mit einer Vakuumpumpe verbunden ist.

4. Einrichtung nach Anspruch 2, **dadurch gekennzeichnet, daß** die Walze (19) in einem solchen Abstand parallel zur Umlenkleiste (7) oder -trommel (8) und zu dem um diese geführten Transportband (3) angeordnet ist, daß die Produkte (P) den gebildeten Spalt ohne Behinderung passieren können.

5. Einrichtung nach Anspruch 1, **dadurch gekennzeichnet, daß** der Belüftungskanal (29) im Übergabebereich mit einer Blaseinrichtung verbindbar ist.

6. Einrichtung nach Anspruch 1, 2 oder 4, **dadurch gekennzeichnet, daß** die Walze (19) zugleich als Stanzwalze ausgebildet ist und Stanzglieder (26) aufweist.

## Claims

1. Device for the transfer of segregated flat-shaped products, especially of plasters, pressure-sensitive adhesive labels or postage stamps, onto a transport device (3), comprising a transport device (3) and a transfer device (19) for the ordered feeding of said products to the said transport device (3), the latter being coupled with a vacuum device by which, in cooperation with the transport device (3), the products are taken over in an ordered manner and can be fixed thereto, **characterized in that** the said transport device (3) has suction openings (12) in regular arrangement, and that the said transfer device has a roll (19) with suction orifices (20) arranged at the circumference thereof which (20) are supplied with negative pressure via a groove (28), to which a vacuum is applied, and which, after a partial revolution, are supplied with air via a ventilation channel (29), with the roll (19) being arranged transverse to the transport device (3), and the respective suction orifices (20) connected with the ventilation channel (29) facing towards the transport device (3) and being moved past the same.

2. Device according to Claim 1, **characterized in that** the conveyor belt (3) has on the side facing towards the roll (19) a deflecting strip (7) or a deflecting drum (8) having grooves and/or slots (10, 16, 17) which correspond with suction orifices (12), for continuous suction of air.

3. Device according to Claim 2, **characterized in that** the deflecting strip (7) and the slide surface (9) are configured on a vacuum container (4) which is connected to a vacuum pump, said vacuum container (4) extending along the transport path.

4. Device according to Claim 2, **characterized in that** the roll (19) is arranged at such distance parallel to the deflecting ledge (7) or deflecting drum (8) and to the conveyor belt (3), which is led around said deflecting ledge (7) or drum (8), that the products (P) are able to pass through the resultant slot without being obstructed.

5. Device according to Claim 1, **characterized in that** the ventilation channel (29) can be connected in the transfer area with a blowing device.

6. Device according to Claims 1, 2 or 4, **characterized in that** the roll (19) is at the same time configured as punching roll and comprises punching members (26).

## Revendications

1. Dispositif pour transférer des produits en nappes individuels, notamment des pavés, des étiquettes ou des timbres, sur un dispositif de transport (3), comprenant un dispositif de transport (3) et un dispositif de transfert (19) pour l'amenée en ordre des produits au dispositif de transport (3), celui-ci étant couplé à un dispositif de vide, par lequel les produits sont transférés d'une manière ordonnée par interaction avec le dispositif de transport (3) et peuvent être fixés à celui-ci, **caractérisé en ce que** le dispositif de transport (3) présente des ouvertures d'aspiration (12) selon un agencement régulier et **en ce que** le dispositif de transfert est un cylindre (19) avec des ouvertures d'aspiration (20) disposées à sa périphérie, qui (20) sont alimentées en vide partiel par une rainure (28) à laquelle est appliqué du vide et, après une rotation partielle, en air par un canal d'aération (29), le cylindre (19) étant disposé transversalement au dispositif de transport (3) et les ouvertures d'aspiration (20) reliées à chaque fois au canal d'aération (29) sont orientées vers le dispositif de transport (3) et peuvent passer devant celui-ci.

2. Dispositif selon la revendication 1, **caractérisé en ce que** la bande de transport (3) présente sur le côté orienté vers le cylindre (19) un listel de guidage (7) ou un tambour de guidage (8) qui présente avec les ouvertures d'aspiration (12) des rainures et/ou des fentes correspondantes (10, 16, 17) pour une aspiration continue de l'air.

3. Dispositif selon la revendication 2, **caractérisé en ce que** le listel de guidage (7) et la surface de glissement (9) sont conçus sur un récipient à vide (4) s'étendant par-dessus le parcours de transport et qui est relié à une pompe à vide.

4. Dispositif selon la revendication 2, **caractérisé en ce que** le cylindre (19) est disposé à une certaine distance parallèlement au listel (7) ou au tambour (8) de guidage et à la bande de transport (3) guidée autour de ceux-ci, **en ce que** les produits (P) peuvent traverser la fente formée sans obstacle.

5. Dispositif selon la revendication 1, **caractérisé en ce que** le canal d'aération (29) peut être relié dans la zone de transfert à un dispositif de soufflage.

6. Dispositif selon la revendication 1, 2 ou 4, **caractérisé en ce que** le cylindre (19) est à la fois conçu comme cylindre d'estampage et présente des éléments d'estampage (26).
